# EUROPEAN PATENT APPLICATION

(11) **EP 4 716 074 A1**
(43) Date of publication of application: **25.03.2026**
(21) Application number: 24807163.1
(22) Date of filing: 10.05.2024
(51) Int. Cl.: H02K 15/06

(54) **METHOD AND DEVICE FOR MANUFACTURING STATOR**

(30) Priority: 18.05.2023 JP 2023082599
(71) Applicant: NHK Spring Co., Ltd., Yokohama-shi, Kanagawa 236-0004 (JP)
(72) Inventor: KOBAYASHI, Dai, Yokohama-shi, Kanagawa 236-0004 (JP)
(74) Representative: Oppermann, Frank
(86) International application number: PCT/JP2024/017480
(87) International publication number: WO 2024/237211

(57) **Abstract**

Provided is a method for manufacturing a stator capable of easily form a power line by bending a coil end portion. It is a method for manufacturing a stator 1 in which a first coil end portion 9Aa on an outermost periphery in a plurality of coil end portions 9 of segment coils 7 held by a stator core 3 is bent to be a power line 11, includes bending a second coil end portion 9b adjacent inward to the first coil end portion 9Aa in a radial direction of the stator core 3 so that a base end portion 10b is inclined outward in the radial direction and a tip end portion 10a is along an axial direction, keeping the first coil end portion 9Aa in an inclined state along an inclination of the base end portion 10b of the second coil end portion 9b, and holding and displacing the tip end portion 10a of the inclined first coil end portion 9Aa to bend the first coil end portion 9Aa to be the power line 11.

## Description

### FIELD OF THE INVENTION

The present invention relates to a method and a device for manufacturing a stator in which coil end portions of segment coils held by a stator core are bent to be power lines.

### BACKGROUND OF THE INVENTION

As a conventional method for manufacturing a stator, there is one using a plurality of deformation jigs as described in Patent Document 1, for example.

In this manufacturing method, a base is disposed outside a coil end portion (power line) to be a power line, first. Next, a blade is driven between the power line and an adjacent coil end portion, to incline the power line outward with the base as a fulcrum.

A block-shaped first deformation jig is inserted between the inclined power line and the adjacent coil end portion, and the first deformation jig is moved radially outward while holding the power line between the first deformation jig and the base.

Thereafter, a second deformation jig being a roller disposed outside the base is moved parallel to the adjacent coil end portion, to bend a tip end portion of the power line along an axial direction.

In this manufacturing method, the power line is surely bent in a crank shape. It is, however, necessary to control the blade and the first and the second deformation jigs to work together, and it complicates formation of the power line based on the bending of the coil end portion.

### CITATION LIST

### PATENT LITERATURE

PATENT LITERATURE 1: JP6269514B

### SUMMARY OF THE INVENTION

### PROBLEMS TO BE SOLVED BY THE INVENTION

The problem to be solved is that formation of a power line based on bending of a coil end portion is complicated.

### MEANS FOR SOLVING THE PROBLEM

The present invention provides a method for manufacturing a stator in which a first coil end portion on an outermost periphery in a plurality of coil end portions of segment coils held by a stator core is bent to be a power line. The manufacturing method bends a second coil end portion adjacent inward to the first coil end portion in a radial direction of the stator core so that a base end portion is inclined outward in the radial direction and a tip end portion is along an axial direction, keeps the first coil end portion in an inclined state along an inclination of the base end portion of the second coil end portion, and holds and displaces the tip end portion of the inclined first coil end portion to bend the first coil end portion to be the power line.

In addition, the present invention provides a device for manufacturing a stator in which a first coil end portion on an outermost periphery in a plurality of coil end portions of segment coils held by a stator core is bent to be a power line. The manufacturing device includes a tooth that is inserted into an interstice between adjacent coil end portions, a pusher movable with respect to the tooth inserted into the interstice between the coil end portions in an intersecting direction relative to a direction of the inserting, a holding part that holds a tip end portion of the first coil end portion, a controller that controls the tooth, the pusher, and the holding part. Then, the tooth is inserted in an axial direction into the interstice between the coil end portions, a second coil end portion that is adjacent inside the first coil end in a radial direction in the stator core, the interstice being inside the second coil end portion in the radial direction, to incline the first coil end portion from a state along the axial direction together with the second coil end portion, a tip end portion of the second coil end portion is pressed against the tooth by the pusher, to make the tip end portion of the second coil end portion along the axial direction, and the holding part holding the tip end portion of the inclined first coil end portion is displaced, thereby bending the first coil end portion to be the power line.

### EFFECT OF THE INVENTION

According to the present invention, it is possible to easily form a power line by bending a coil end portion.

### BRIEF DESCRIPTION OF THE DRAWINGS

[FIG. 1] FIG. 1 is a schematic perspective view illustrating a stator according to an embodiment 1 of the present invention.
[FIG. 2] FIG. 2 is an enlarged sectional view partially illustrating the stator of FIG. 1.
[FIG. 3] FIG. 3 is a side view illustrating a device for manufacturing the stator according to the embodiment 1.
[FIG. 4] FIG. 4 is an enlarged side view illustrating a state before bending with respect to coil end portions in a slot without a power line according to a method for manufacturing the stator of the embodiment 1.
[FIG. 5] FIG. 5 is an enlarged side view illustrating a state at the start of the bending with respect to the coil end portions of the slot without a power line according to the method for manufacturing the stator of the embodiment 1.
[FIG. 6] FIG. 6 is an enlarged side view illustrating part of FIG. 5.
[FIG. 7] FIG. 7 is an enlarged side view illustrating an inclined state of a bending jig with respect to the coil end portions of the slot without a power line according to the method for manufacturing the stator of the embodiment 1.
[FIG. 8] FIG. 8 is an enlarged side view illustrating part of FIG. 7.
[FIG. 9] FIG. 9 is an enlarged side view illustrating a state during the bending with respect to the coil end portions of the slot without a power line according to the method for manufacturing the stator of the embodiment 1.
[FIG. 10] FIG. 10 is an enlarged side view illustrating part of FIG. 9.
[FIG. 11] FIG. 11 is an enlarged side view illustrating a state at the time of completion of the bending with respect to the coil end portions of the slot without a power line according to the method for manufacturing the stator of the embodiment 1.
[FIG. 12] FIG. 12 is an enlarged side view illustrating part of FIG. 11.
[FIG. 13] FIG. 13 is an enlarged side view illustrating a state at the start of bending with respect to coil end portions in a slot having a power line according to the method for manufacturing the stator of the embodiment 1.
[FIG. 14] FIG. 14 is an enlarged side view illustrating a state during the bending with respect to the coil end portions of the slot having the power line according to the method for manufacturing the stator of the embodiment 1.
[FIG. 15] FIG. 15 is an enlarged side view illustrating part of FIG. 14.
[FIG. 16] FIG. 16 is an enlarged side view illustrating a state at the time of completion of the bending with respect to the coil end portions other than the power line of the slot having the power line according to the method for manufacturing the stator of the embodiment 1.
[FIG. 17] FIG. 17 is an enlarged side view illustrating part of FIG. 16.
[FIG. 18] FIG. 18 is an enlarged side view illustrating a state before the power line is bent according to the method for manufacturing the stator of the embodiment 1.
[FIG. 19] FIG. 19 is an enlarged side view illustrating part of FIG. 18.
[FIG. 20] FIG. 20 is an enlarged side view illustrating a state at the start of bending of the power line according to the method for manufacturing the stator of the embodiment 1.
[FIG. 21] FIG. 21 is an enlarged side view illustrating part of FIG. 20.
[FIG. 22] FIG. 22 is an enlarged side view illustrating a state at the time of completion of the bending of the power line according to the method for manufacturing the stator of the embodiment 1.
[FIG. 23] FIG. 23 is a front view illustrating a bending jig of a device for manufacturing a stator according to an embodiment 2.
[FIG. 24] FIG. 24 is a rear view illustrating the bending jig of FIG. 23.
[FIG. 25] FIG. 25 is a side view illustrating the bending jig of FIG. 23.
[FIG. 26] FIG. 26 is a front view illustrating the bending jig of the manufacturing device for the stator according to a modification of the second embodiment.

### EMBODIMENT FOR CARRYING OUT THE INVENTION

The object of easily forming a power line by bending a coil end portion is accomplished by inclining a first coil end portion along an inclination of a base end portion accompanying bending of an adjacent second coil end portion and holding and bending a tip end portion of the inclined first coil end portion.

As illustrated in the drawings, a method for manufacturing a stator 1 is to bend a first coil end portion 9Aa on an outermost periphery in a plurality of coil end portions 9 of segment coils 7 held by a stator core 3 to be a power line 11.

In this manufacturing method, a second coil end portion 9 b adjacent inward to the first coil end portion 9 Aa in a radial direction of a stator core 3 is bent such that a base end portion 10b is inclined outward in the radial direction and a tip end portion 10a is along an axial direction. The first coil end portion 9Aa is held in an inclined state along the inclination of the base end portion 10b of the second coil end portion 9. Then, the first coil end portion 9Aa is bent to be the power line 11 by holding and displacing the tip end portion 10a of the inclined first coil end portion 9Aa.

This manufacturing method may employ an appropriate method for holding the tip end portion 10a of the inclined first coil end portion 9Aa. In one embodiment, the tip end portion 10a of the inclined first coil end portion 9Aa is positioned and held between a pair of wall portions 25a and 29. One 29 of the pair of wall portions is positioned between the first coil end portion 9Aa and the second coil end portion 9b, and the bending is performed by pressing the first coil end portion 9Aa against a curved face 29a provided at a tip end of the one 29 of the pair of wall portions.

Although the bending of the second coil end portion 9b is performed by an appropriate method, a tooth 25a and a pusher 21 may be used as one embodiment. In this case, the tooth 25a is axially inserted in an interstice between adjacent coil end portions 9 inside the second coil end portion 9b in the radial direction, and the first coil end portion 25a is inclined from a state along the axial direction together with the second coil end portion 9b. Then, the tip end portion 10a of the second coil end portion 9b is pressed against the tooth 25a by the pusher 21 to be along the axial direction.

The first coil end portion 9Aa may be shorter in the axial direction than the second coil end portion 9b in a state before the bending, and the pusher 21 may press the second coil end portion 9b to the tooth 25a within a range in which the second coil end portion 9b projects in the axial direction from the first coil end portion 9Aa.

The manufacturing device 15 for the stator 1 is provided with the tooth 25a, the pusher 21, a holding part 27, and a controller 31. The tooth 25a is a member that is inserted into an interstice between adjacent coil end portions 9. The pusher 21 is configured to be movable with respect to the tooth 25a inserted into the interstice between the coil end portions 9 in an intersecting direction relative to a direction of the inserting. The holding portion 27 is configured to hold the tip end portion 10a of the first coil end portion 9Aa. The controller 31 controls the tooth 25a, the pusher 21, and the holding part 27.

The controller 31 conducts inserting the tooth 25a in the axial direction in the interstice between the coil end portions 9 inside the second coil end portion 9b adjacent inward to the first coil end portion 9Aa in the radial direction of the stator core 3, to incline the first coil end portion 9Aa from a state along the axial direction together with the second coil end portion 9b. Further, the controller 31 conducts pressing the tip end portion 10a of the second coil end portion 9b against the tooth 25a by the pusher 21, and makes the tip end portion 10a of the second coil end portion 9b follow the axial direction. Then, the controller 31 conducts bending the first coil end portion 9Aa to be the power line 11 by displacing the holding part 27 holding the tip end portion 10a of the inclined first coil end portion 9Aa.

The holding portion 27 may be provided with a pair of wall portions 25a and 29 that cause the tip end portion 10a of the inclined first coil end portion 9Aa to be positioned and held therebetween, and a curved face 29a that is provided at a tip end of one 29 of the pair of wall portions 25a and 29 positioned between the first coil end portion 9Aa and the second coil end portion 9b at the time of the holding and is pressed against the first coil end portion 9Aa to perform the bending.

The tooth 25a and the holding part 27 may be disposed on a bending jig 19 that is displaceable by the robot manipulator 17.

### EMBODIMENT 1

### [Stator]

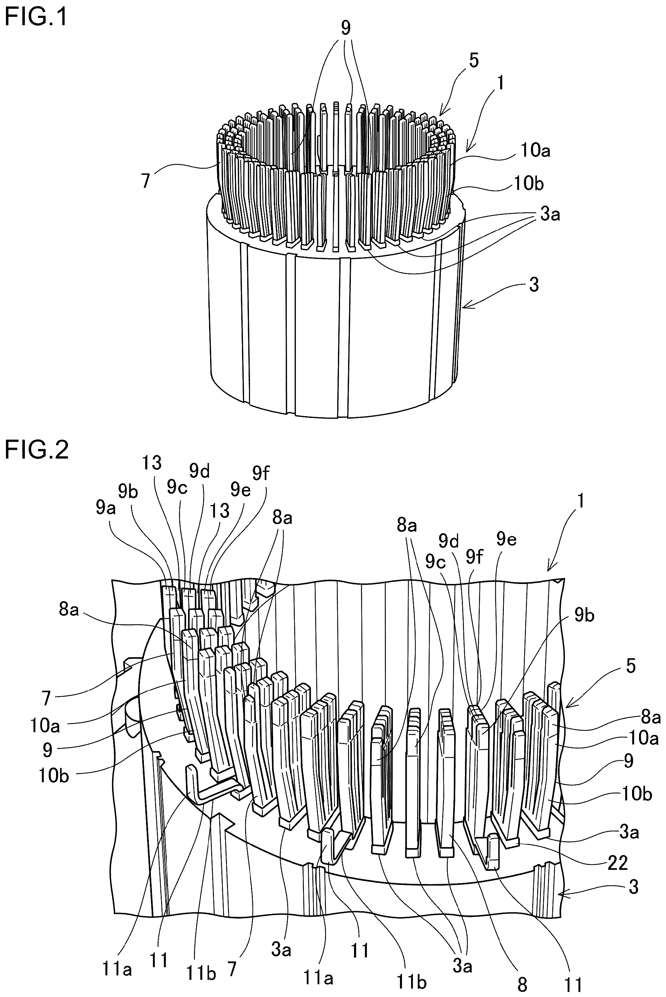

FIG. 1 is a schematic perspective view illustrating a stator according to the embodiment 1 of the present invention. FIG. 2 is an enlarged sectional view partially illustrating the stator of FIG. 1.

The stator 1 of FIGS. 1 and 2 forms a rotating electrical machine together with a rotor that is not illustrated. The rotating electrical machine is configured as, for example, a 3-phase (U-phase, V-phase, and W-phase) AC permanent magnet synchronous motor with 8 poles, which drives driving wheels of an electric vehicle being not illustrated and generates electricity according to regenerative braking force from the driving wheels.

Here, FIGS. 1 and 2 illustrate a state in which a stator coil 5 is incorporated in a stator core 3. In the state of FIG. 1, tip end portions 10a of coil end portions 9 of each segment coil 7 forming the stator coil 5 are in a state along an axial direction. The axial direction is an axial direction of the stator core 3.

With respect to the state of FIG. 1, the coil end portions 9 are bent in the circumferential direction, and then joined by welding to form the stator coil 5. Thereafter, insulating coating is conducted to terminals 8a of the coil end portions 9, and resin encapsulation is conducted to a portion of the stator coil 5 and the like to form the stator 1 for a rotating electrical machine. In the following explanation, one illustrated in FIG. 1 is regarded as the stator 1 for the explanation as a matter of convenience.

As mentioned above, the stator 1 is provided with the stator core 3 and the stator coil 5. The stator core 3 is formed by stacking, for example, a plurality of annular electromagnetic steel sheets. The stator core 3 is provided with a plurality of slots 3a at equal intervals in the circumferential direction.

The stator coil 5 is provided for three phases in the stator core 3 and is configured into a wave-winding shape. The stator coil 5 is composed of a plurality of segment coils 7.

Each of the segment coils 7 is, for example, a rectangular flat wire having a rectangular cross section formed into a U shape, for example, a hairpin shape. In addition, the sectional shape and the like of the segment coil 7 are not particularly limited. The plurality of the segment coils 7 are combined in the circumferential direction with respect to the stator core 3.

In each segment coil 7, leg portions 8 including terminals 8a having no insulating layer are inserted into the slots 3a of the stator core 3. Accordingly, the segment coils 7 are held by the stator core 3. In addition, the insulating layer is formed entirely on a part of the segment coil 7 other than the terminals 8a.

The leg portions 8 of the segment coil 7 pass through the stator core 3. With this, the coil end portions 9 of the leg portions 8 including the terminals 8a are projected from the stator core 3 in the axial direction. FIG. 1 and FIG. 2 illustrate a state in which the leg portions 8 of the segment coils 7 are pushed into the stator core 3 from below and projected upward. The projecting in this context means that a tip end portion and a base end portion of the coil end portion 9 are arranged so as to be shifted in the axial direction.

The coil end portions 9 are arranged in a row in a radial direction in each slot 3. In the present embodiment, a first coil end portion 9a on an outermost periphery to a sixth coil end portion 9f on an innermost periphery are located in the slot 3a according to the phases of the stator coil 5.

It should be noted that the first coil end portion 9a (and a first coil end portion 9Aa explained later) to the sixth coil end portion 9f on the innermost periphery mean the coil end portions 9 in the same slot 3a, and are particularly used to identify the coil end portions 9 in each slot 3a.

In the slot 3a having the power line 11, a power line 11 is formed by bending the first coil end portion 9Aa for the power line, and the second coil end portion 9b to the sixth coil end portion 9f are located in the slot 3a together with the power line 11.

A radial gap 13 is formed between the tip end portions 10a of the coil end portions 9 of the adjacent layers. This gap 13 facilitates to bend the coil end portion 9 in the circumferential direction.

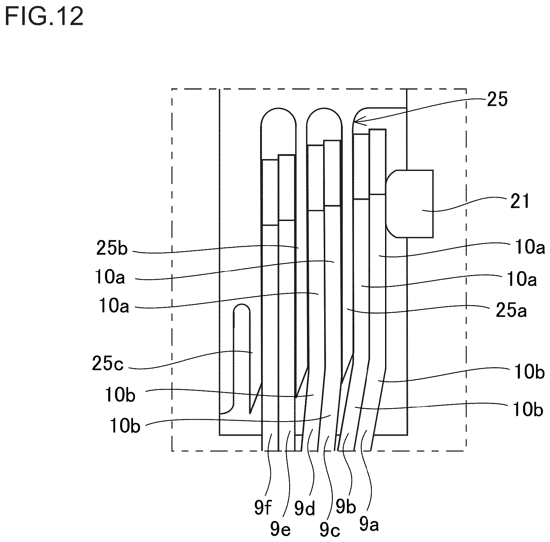

In order to form the gap 13, the first to the fourth coil end portions 9a to 9d include the tip end portions 10a along the axial direction and the base end portions 10b inclined with respect to the axial direction (see FIG. 12). The inclination of the base end portion 10b is conducted by gradually displacing the base end portion outward in the radial direction toward the tip end portion 10a.

The tip end portion 10a in this context is a portion finally following the axial direction. The tip end portion 10a does not need to strictly follow the axial direction, and includes a case where the tip end portion is slightly inclined. The base end portion 10b is a portion located on the stator core 3 side with respect to the tip end portion 10a. The inclination of the base end portion 10b means that it is inclined more than the tip end portion 10a if the tip end portion 10a is slightly inclined with respect to the axial direction.

The power line 11 has a shape bent into a crank shape. The power line 11 includes a tip end portion 11a along the axial direction and a base end portion 11b inclined with respect to the axial direction. The inclination of the base end portion 11b is performed so as to be gradually displaced outward in the radial direction toward the tip end portion 11a. The inclination angle of the base end portion 11b with respect to the axial direction is larger than the inclination angle of the base end portions 10b of the first to the fourth coil end portions 9a to 9d with respect to the axial direction.

### [Device and method for manufacturing stator]

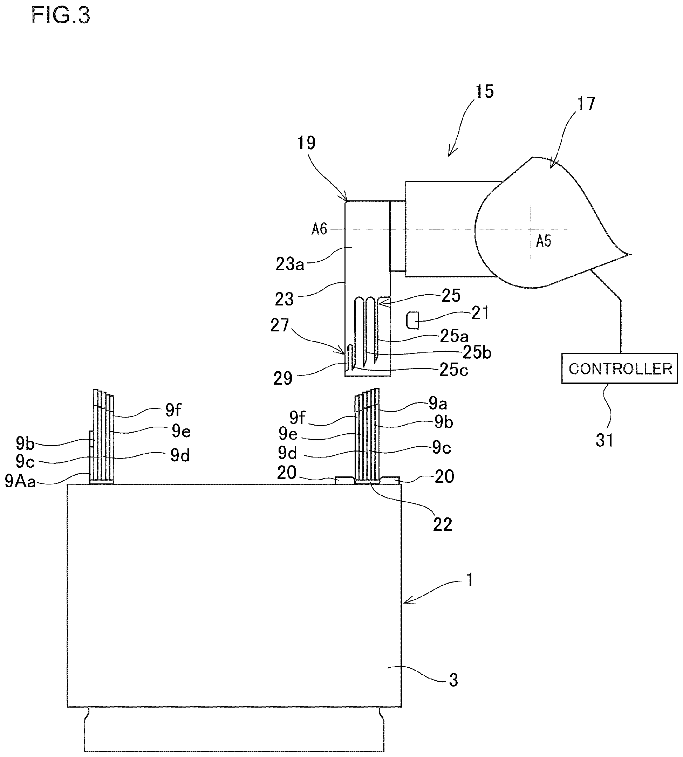

FIG. 3 is a side view illustrating a device for manufacturing the stator according to the embodiment 1.

In the present embodiment, the stator 1 is manufactured using the device 15 for manufacturing the stator 1 of FIG. 3. The manufacturing device 15 is provided with a robot manipulator 17, a bending jig 19, a clamp 20, a pusher 21, and a controller 31.

The robot manipulator 17 is, for example, a six-axis vertical articulated robot. The bending jig 19 as an end effector is attached to an end portion of the robot manipulator 17. In addition, although only one robot manipulator 17 is illustrated in FIG. 3, it is not limited thereto and a plurality of robot manipulators may be provided in the circumferential direction of the stator 1.

The bending jig 19 is for forming the gap 13 between the coil end portions 9 of the adjacent layers and forming the power lines 11. It should be noted that the formation of the gap 13 and the formation of the power line 11 may be performed separately by different jigs or the like.

The bending jig 19 is provided with a main body portion 23, comb teeth 25, and a holding part 27. The main body portion 23 is made of, for example, metal into a plate shape. The comb teeth 25 and the holding part 27 are provided on one side face 23a of the main body portion 23.

The comb teeth 25 are arranged at intervals in the axial direction of the sixth axis A6 of the robot manipulator 17, and a plurality of, three teeth 25a, 25b, and 25c are provided in the present embodiment. The teeth 25a, 25b, and 25c are formed in plate shapes.

The teeth 25a, 25b, and 25c extend in a direction away from the sixth axis A6, and tip ends of the teeth are pointed in a single-edged shape. These teeth 25a, 25b, and 25c are arranged along the axial direction of the stator core 3, and surfaces inclined in the single-edged shape are oriented outward in the radial direction in a state where an arrangement direction thereof coincides with the radial direction of the stator 1 in which the coil end portions 9 are aligned in the slot 3a. Further, in this state, the teeth are gradually shortened in the axial direction from the tooth 25c on the inner side to the tooth 25a on the outer side in the radial direction.

The clamp 20 is made of, for example, metal or the like into a plate shape, and clamps the base ends of the coil end portions 9 in the slot 3a from inside and outside in the radial direction. With this clamping, an insulating paper 22 between the slot 3a and the coil end portions 9 is protected and starting points to bend the coil end portions 9 are configured.

The pusher 21 is a columnar shape formed of a resin or the like. The pusher 21 is movable so as to approach and separate with respect to the tooth 25a outside the direction along the sixth axis A6 of the robot manipulator 17.

A moving direction of the pusher 21 is a radial direction that is an orthogonal direction to the axial direction being a direction of inserting of the tooth 25a into an interstice between the coil end portions 9. The moving direction of the pusher 21, however, may be a direction inclined with respect to the radial direction and the sixth axis A6. The movement of the pusher 21 may be performed by an appropriate actuator such as a linear actuator. The pusher 21 may be supported on the robot manipulator 17 or other members.

The holding part 27 is to hold the tip end portion 10a of the first coil end portion 9Aa for the power line 11. The holding part 27 of the present embodiment is provided with the tooth 25c and a wall portion 29 as a pair of wall portions. In the present embodiment, the tooth 25c is used as one wall portion, but a separate wall portion may be provided.

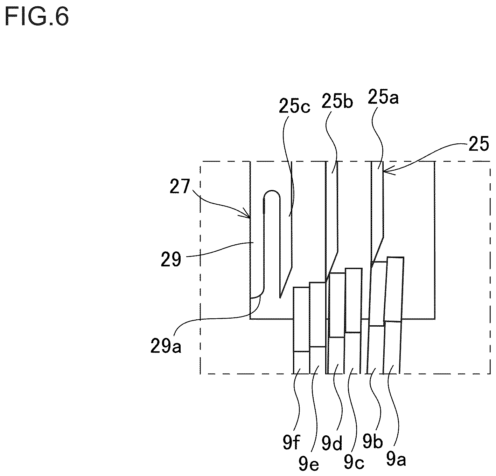

The wall portion 29 is arranged at an interval in the axial direction of the sixth axis A6 with respect to the tooth 25c. The holding part 27 is configured to cause the tip end portion 10a of the first coil end 9Aa to be inserted and held between the tooth 25c and the wall portion 29. The holding part 27, however, may be configured by a robot hand or the like. The wall portion 29 has a curved face 29a at a corner facing the tooth 25c on a tip end in a direction away from the sixth axis A6 (see FIG. 6).

The controller 31 is composed of a computer having a processor, a memory, and the like. In FIG. 3, the controller 31 is only conceptually illustrated. The controller 31 controls the bending jig 19, i.e., the teeth 25a, 25b, and 25c, and the holding part 27 through the robot manipulator 17, and also controls the pusher 21. Through this control, a method for manufacturing the stator 1 is realized.

Hereinafter, the method of manufacturing the stator 1 will be explained as the control of the manufacturing device 15 by the controller 31.

In the manufacturing method of the stator 1, inter-layer expansion is performed. As illustrated in FIG. 1 and FIG. 2, the inter-layer expansion is expanded between the coil end portions 9 of the adjacent layers in the slot 3a to form the gap 13. The inter-layer expansion is performed for both the slots 3a without the power line 11 and the slots 3 with the power line 11.

In the slot 3a without the power line 11, the coil end portions 9 are bent except for the innermost peripheral layer in the radial direction of the stator core 3. It should be noted that the coil end portion 9 of the innermost peripheral layer may also be bent in some cases. The bending of the coil end portions 9 is performed such that the base end portions 10b of the coil end portions 9 are inclined outward in the radial direction, and the tip end portions 10a are along the axial direction.

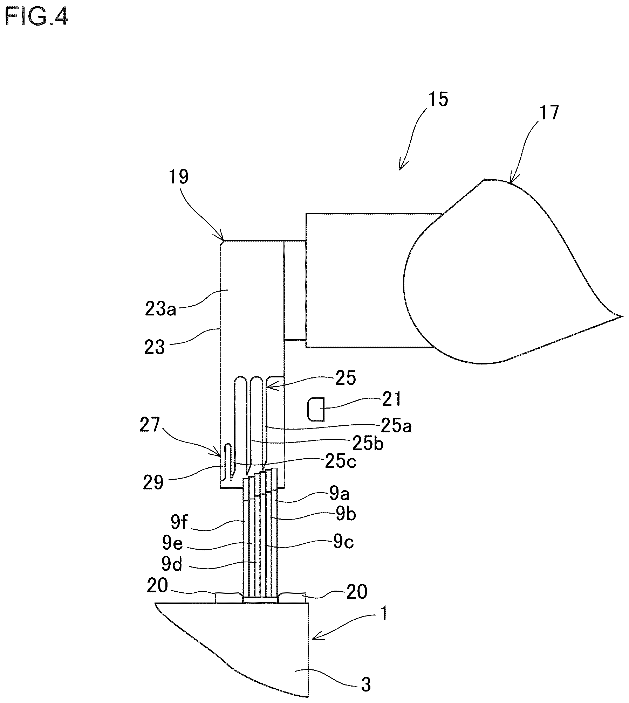

FIG. 4 is an enlarged side view illustrating a state before the bending with respect to the coil end portions in the slot without the power line according to the manufacturing method for the stator of the embodiment 1.

As illustrated in FIGS. 3 and 4, the stator 1 is held at a predetermined position, and the axial direction of the stator core 3 is arranged along a vertical direction in the present embodiment, first. At this time, the clamp 20 clamps the base ends of the first coil end 9a to the sixth coil end 9f. It should be noted that the first coil end 9a to the sixth coil end 9f are entirely along the axial direction before the bending, and lengths in the axial direction are gradually shortened from the first coil end 9a to the sixth coil end 9f in each slot 3.

In a part in which the power line 11 is formed, the length of the first coil end 9Aa is the shortest in the axial direction, and the lengths of the other second coil ends 9b to the sixth coil end 9f are gradually shortened in the axial direction similarly to the above (see FIG. 3).

The bending jig 19 is positioned over the stator 1 by the robot manipulator 17. At this time, the teeth 25a, 25b, and 25c of the comb teeth 25 of the bending jig 19 are arranged along the axial direction, and the single-edged inclined faces are oriented outward in the radial direction of the stator core 3.

Then, the tip ends of the teeth 25a, 25b, and 25c of the comb teeth 25 are disposed so as to radially face the coil end portions 9 located radially inward the respective layers, in the present embodiment the second, the fourth, and the sixth coil end portions 9b, 9d, and 9f. This arrangement is performed based on differences in length in the axial direction of the teeth 25a, 25b, and 25c, and differences in length in the axial direction of the coil end portions 9.

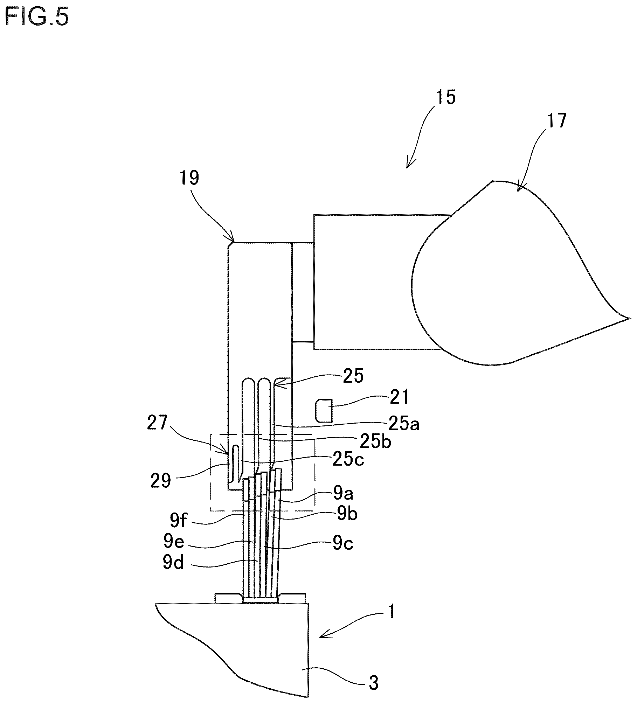

FIG. 5 is an enlarged side view illustrating a state at the start of the bending with respect to the coil end portions of the slot without the power line. FIG. 6 is an enlarged side view illustrating part of FIG. 5.

As illustrated in FIGS. 5 and 6, the bending jig 19 is moved in the radial direction by the robot manipulator 17. This brings the tip ends of the teeth 25a, 25b, and 25c of the comb teeth 25 into contact with the facing coil end portions 9 (second, fourth, and sixth coil end portions 9b, 9d, and 9f) in the radial direction, respectively.

Accordingly, the tip ends of the teeth 25a, 25b, and 25c of the comb teeth 25 are located at interstices between the coil end portions 9 of the adjacent layers. Specifically, the tooth 25a is positioned at the interstice between the second and the third coil end portions 9b and 9c, and the tooth 25b is positioned at the interstice between the fourth and the fifth coil end portions 9d and 9e. Further, the tooth 25c is located inward the sixth coil end portion 9f in the radial direction.

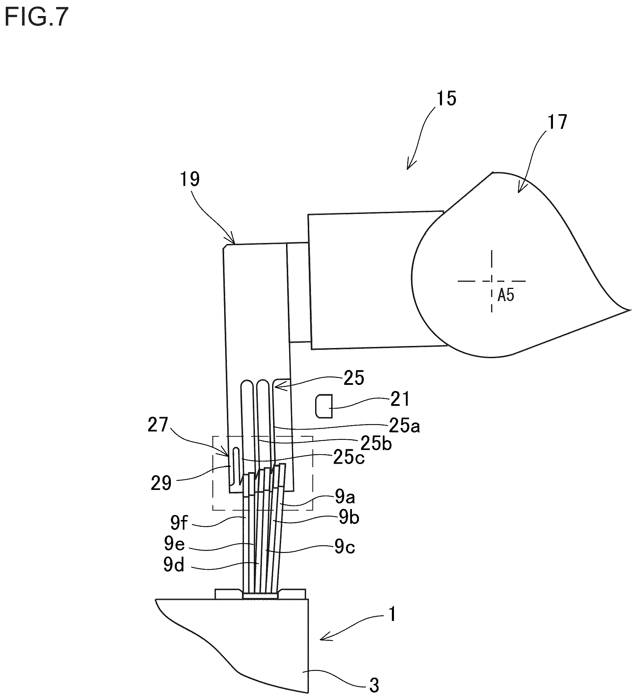

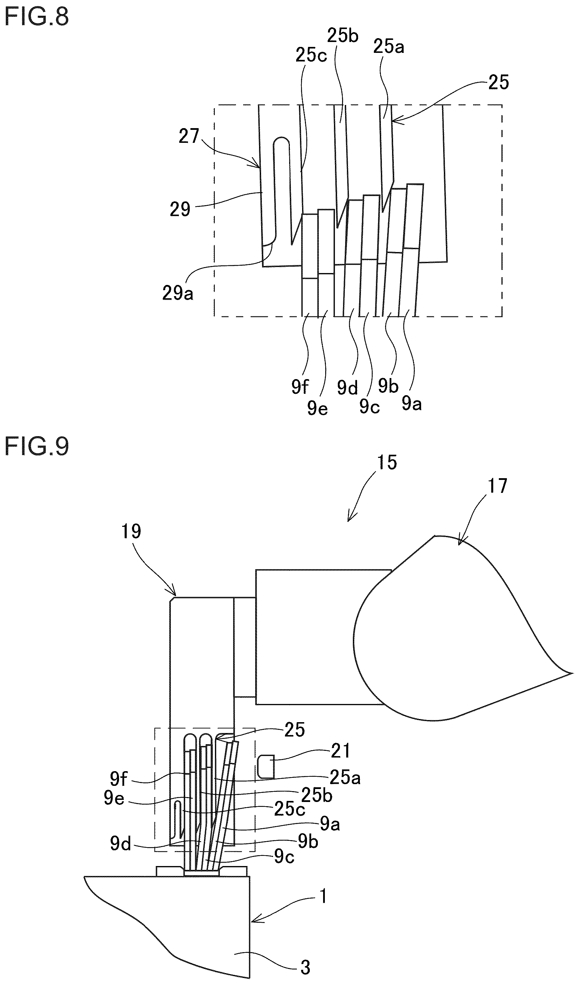

FIG. 7 is an enlarged side view illustrating an inclined state of the bending jig with respect to the coil end portions of the slot without the power line. FIG. 8 is an enlarged side view illustrating part of FIG. 7.

As illustrated in FIGS. 7 and 8, the bending jig 19 is further moved by the robot manipulator 17 toward the stator core 3 in the axial direction. Thus, the teeth 25a and 25b of the comb teeth 25 are inserted into the interstice between the second and the third coil end portions 9b and 9c and the interstice between the fourth and the fifth coil end portions 9d and 9e, which are interstices between the coil end portions 9 of the adjacent layers.

At the time of this insertion, it inclines the comb teeth 25 around an axis line orthogonal to the radial direction of the stator core 3 being the arrangement direction of the teeth 25a, 25b, and 25c and the axial direction of the stator core 3, in this embodiment the bending jig 19 around the fifth axis A5 of the robot manipulator 17. As a result, the teeth 25a, 25b, and 25c of the comb teeth 25 are inclined. The tip ends of the teeth 25a, 25b, and 25c of the comb teeth 25 are, therefore, not in contact with the insulating layer of the coil end portions 9.

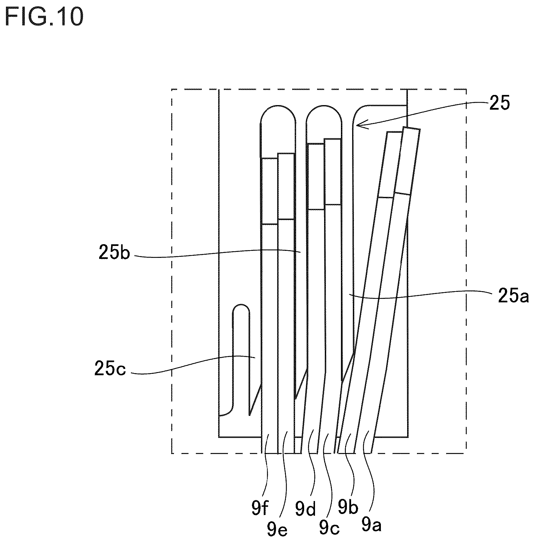

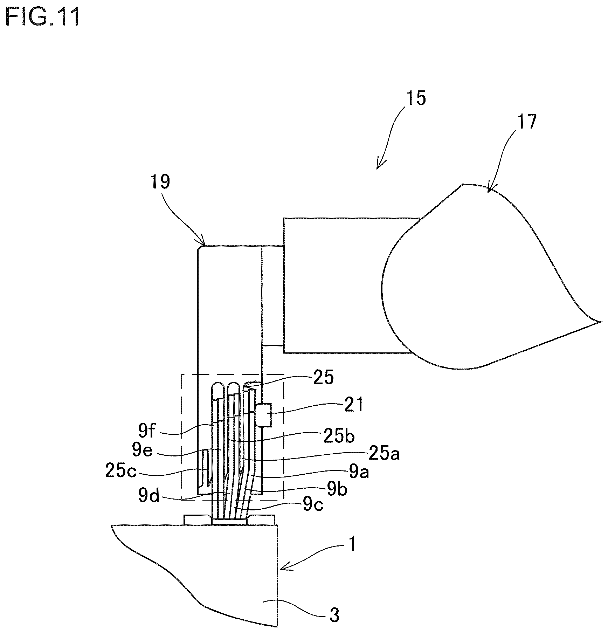

FIG. 9 is an enlarged side view illustrating a state during the bending with respect to the coil end portions of the slot without the power line. FIG. 10 is an enlarged side view illustrating part of FIG. 9. FIG. 11 is an enlarged side view illustrating a state at the time of completion of the bending with respect to the coil end portions of the same. FIG. 12 is an enlarged side view illustrating part of FIG. 11.

As illustrated in FIGS. 9 and 10, in the process of inserting the teeth 25a, 25b, and 25c, the bending jig 19 is displaced by the robot manipulator 17 so that the teeth 25a, 25b, and 25c are along the axial direction again.

When the teeth 25a, 25b, and 25c of the comb teeth 25 are completely inserted, the third and the fourth coil ends 9c and 9d are bent between the teeth 25a and 25b, and the fifth and the sixth coil end portions 9e and 9f are accommodated between the teeth 25b and 25c without being bent. Accordingly, in the third and the fourth coil end portions 9c and 9d, the base end portions 10b are inclined outward in the radial direction, and the tip end portions 10a are along the axial direction.

On the other hand, the first and the second coil end portions 9a and 9b being outermost peripheral layers are inclined entirely because there is no tooth of the comb teeth 25 on an outer side in the radial direction. The tip end portions 10a of the inclined first and second coil end portions 9a and 9b are pressed against the tooth 25a from the outside in the radial direction by the pusher 21 as illustrated in FIGS. 11 and 12. Accordingly, in the first and the second coil end portions 9a and 9 b, the base end portions 10b are inclined outward in the radial direction, and the tip end portions 10a are in a state along the axial direction.

Thereafter, the pusher 21 is separated from the tip end portions 10a of the first and the second coil end portions 9a and 9b, and the bending jig 19 is moved upward by the robot manipulator 17. With this, the teeth 25a and 25b of the comb teeth 25 are pulled out from the interstice between the coil end portions 9 of the adjacent layers. In this way, the inter-layer expansion is completed in the slot 3a without the power line 11.

On the other hand, as in FIG. 1 and FIG. 2, the inter-layer expansion in the slot 3a having the power line 11 also bends the coil end portions 9 so that the base end portions 10b of the coil end portions 9 is inclined outward in the radial direction and the tip end portions 10a thereof is along the axial direction.

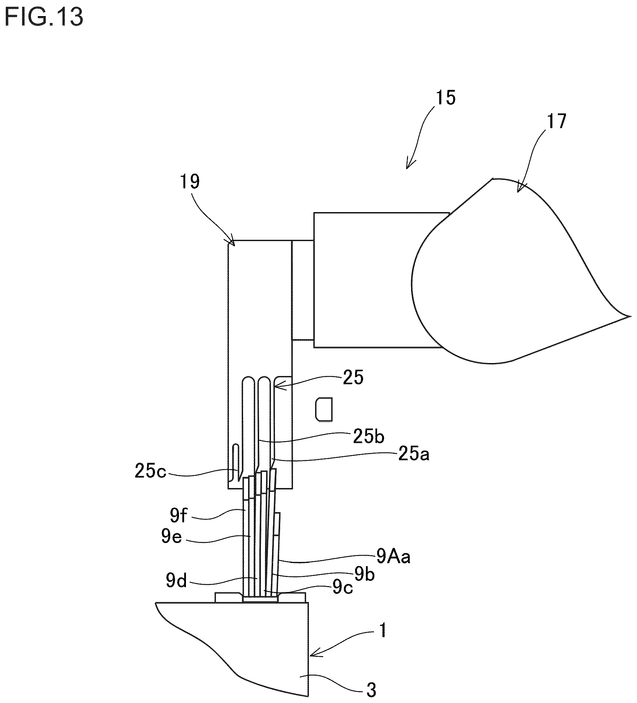

FIG. 13 is an enlarged side view illustrating a state at the start of the bending with respect to the coil end portions in the slot having the power line.

As in FIG. 13, the bending jig 19 is moved in the axial direction and the radial direction by the robot manipulator 17 similarly to the slot 3a without the power line 11. Accordingly, the teeth 25a and 25b of the comb teeth 25 are inserted into the interstice between the second and the third coil end portions 9b and 9c and into the interstice between the fourth and the fifth coil end portions 9d and 9e, which are interstices between the coil end portions 9 of the adjacent layers.

Also in this insertion, the comb teeth 25 are inclined and the tip ends of the teeth 25a, 25b, and 25c of the comb teeth 25 are not in contact with the insulating layer of the coil end portions 9 in the same way as in FIG. 7.

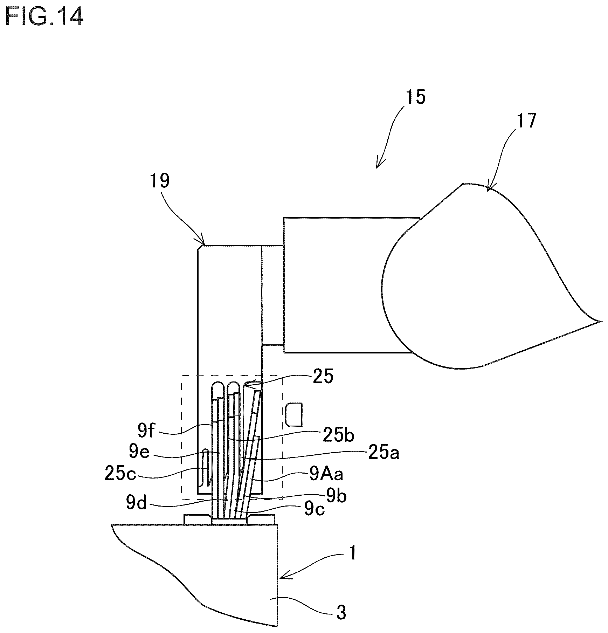

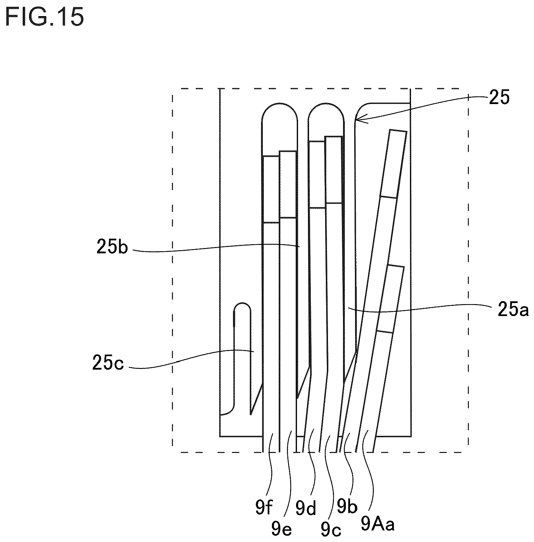

FIG. 14 is an enlarged side view illustrating a state during the bending with respect to the coil end portions of the slot having the power line. FIG. 15 is an enlarged side view illustrating part of FIG. 14.

When the teeth 25a and 25b of the comb teeth 25 are inserted completely, the third and the fourth coil end portions 9c and 9d are bent between the teeth 25a and 25b, and the fifth and the sixth coil end portions 9e and 9f are accommodated between the teeth 25b and 25c without being bent as illustrated in FIGS. 14 and 15. On the other hand, the first and the second coil end portions 9 Aa and 9 b on the outermost layers are inclined as a whole.

With this, the tooth 25a is axially inserted into the interstice between the adjacent coil end portions 9 being inside the second coil end portion 9b in the radial direction, to incline the first coil end portion 9Aa from a state along the axial direction together with the second coil end portion 9b in the present embodiment.

It should be noted that, the tooth 25a of the comb teeth 25 may be omitted and the first and the second coil end portions 9a and 9b may be inclined together with the third and the fourth coil end portions 9c and 9d by the tooth 25b according to the configuration of the stator coil 5. Namely, the interstice between the adjacent coil end portions 9 inside the second coil end portion 9b in the radial direction may be not only the interstice between the second and the third coil end portions 9b and 9c, but also the interstice between the other coil end portions 9, for example, between the fourth and the fifth coil end portions 9d and 9e.

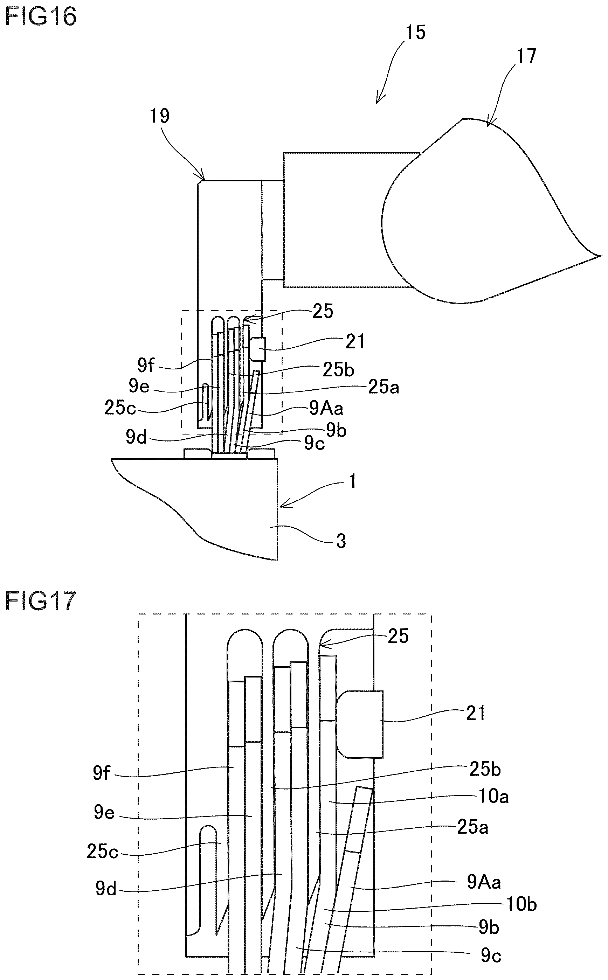

FIG. 16 is an enlarged side view illustrating a state at the time of completion of the bending with respect to the coil end portions other than the power line of the slot having the power line. FIG. 17 is an enlarged side view illustrating part of FIG. 16.

As illustrated in FIG. 16 and FIG. 17, the tip end portion 10a of the second coil end portion 9b in the inclined first and the inclined second coil end portions 9a and 9b is pressed by the pusher 21 against the tooth 25a from the outside in the radial direction.

This pressing is performed at a position where the pusher 21 does not contact the first coil end portion 9Aa. According to the present embodiment, the pusher 21 presses the second coil end portion 9b against the tooth 25a within a range in which the second coil end portion is projected from the first coil end portion 9Aa in the axial direction. As long as the pusher 21 is within this range, the position of the pusher 21 in the axial direction is fixed between the slot 3a having the power line 11 and the slot 3a without the power line 11.

With this pressing, the second coil end portion 9b is bent so that the base end portion 10b is inclined outward in the radial direction and the tip end portion 10a is along the axial direction. On the other hand, the first coil end portion 9Aa contacts the base end portion 10b of the second coil end portion 9b and is held in a state inclined along the inclination of the base end portion 10b of the second coil end portion.

In this way, the first coil end portion 9Aa is separated from the second coil end portion 9b. This separation is performed by the same inter-layer expansion as of the slot 3a without the power line 11 as mentioned above.

Thereafter, the pusher 21 is separated from the tip end portion 10a of the second coil end portion 9b and the bending jig 19 is moved upward by the robot manipulator 17, thereby pulling the teeth 25a and 25b of the comb teeth 25 out from the interstices between the coil end portions 9 of the adjacent layers.

Next, the tip end portion 10a of the inclined first coil end portion 9Aa is held and displaced, whereby the first coil end portion 9Aa is bent to be the power line 11.

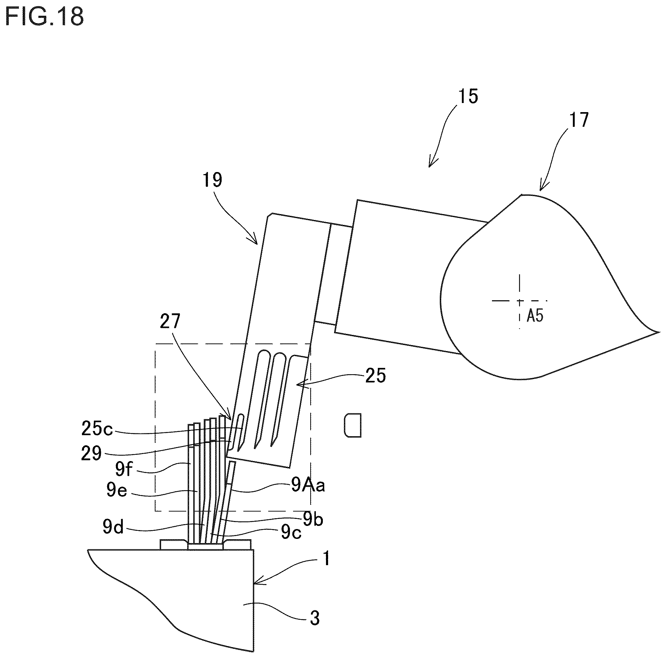

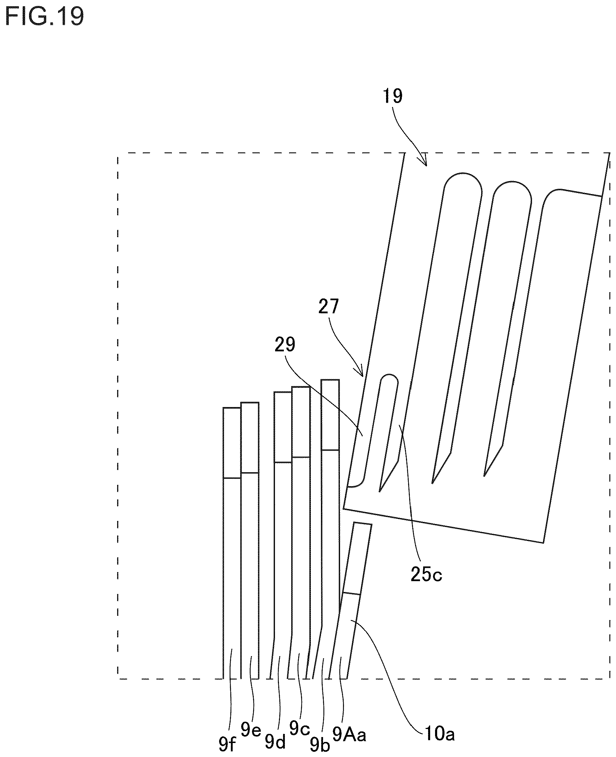

FIG. 18 is an enlarged side view illustrating a state before the power line is bent. FIG. 19 is an enlarged side view illustrating part of FIG. 18.

As illustrated in FIGS. 18 and 19, the bending jig 19 is positioned outside a group of the coil end portions 9 in the radial direction by the robot manipulator 17 in the present embodiment. At this time, the bending jig 19 is inclined so that the tooth 25c and the wall portion 29 being the pair of the wall portions are coincided with the inclination of the tip end portion 10a of the first coil end portion 9Aa. With this, a space between the tooth 25c and the wall portion 29 is oriented toward the tip end portion 10a of the first coil end portion 9Aa. This inclination is performed by rotation around the fifth axis A5 of the robot manipulator 17 as in the case of inclining the comb tooth 25.

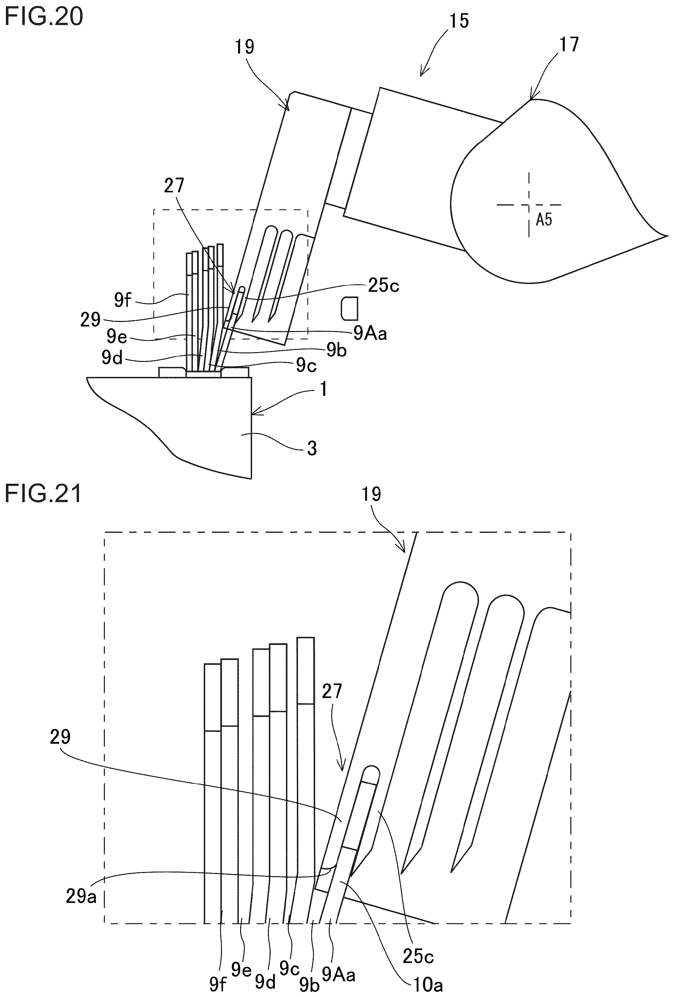

FIG. 20 is an enlarged side view illustrating a state at the start of the bending of the power line. FIG. 21 is an enlarged side view illustrating part of FIG. 20.

Thus, with the state in which the tooth 25c and the wall portion 29 is inclined, the bending jig 19 is displaced as illustrated in FIGS. 20 and 21 to hold the tip end portion 10a of the first coil end portion 9Aa between the tooth 25c and the wall portion 29.

At this time, the inclination of the bending jig 19, i.e., the tooth 25c and the wall portion 29 is increased. The increase in the inclination means increase in the inclination angle with respect to the axial direction. With this increase in the inclination, the tip end portion 10a of the first coil end portion 9Aa is smoothly held. The increase in the inclination of the bending jig 19, however, may be omitted.

At the time of this holding, the wall portion 29 being one of the pair of the wall portions is located between the first coil end portion 9Aa and the second coil end portion 9b. The wall portion 29 has a thickness larger than of the tooth 25c and the like due to the provision of the curved face 29a at the tip end. In the present embodiment, the first coil end portion 9Aa is separated from the second coil end portion 9b as mentioned above, thereby smoothly holding the tip end portion 10a of the first coil end portion 9Aa by the holding part 27 even if the wall portion 29 is thick.

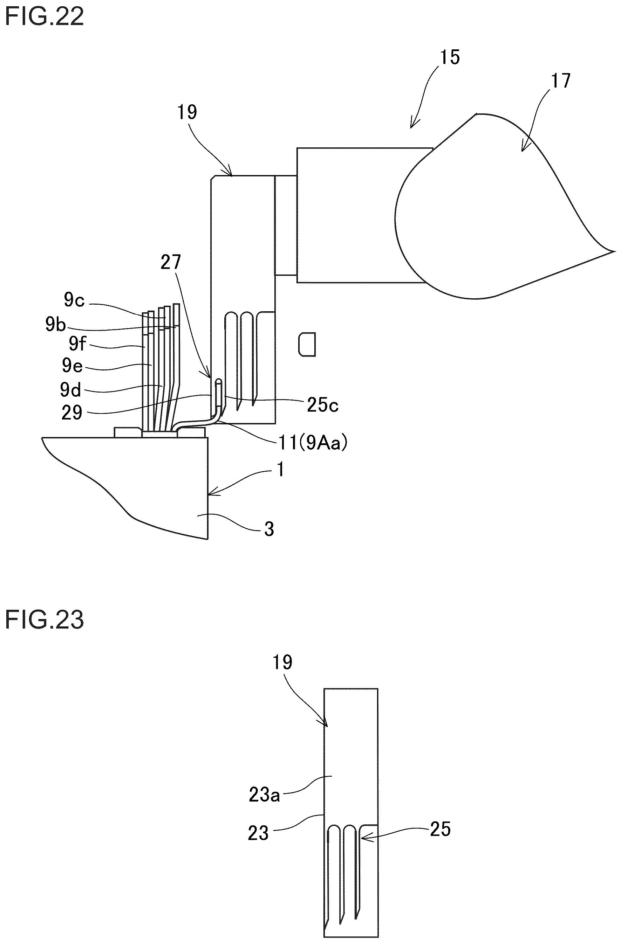

FIG. 22 is an enlarged side view illustrating a state at the time of completion of the bending of the power line.

As illustrated in FIG. 22, the bending jig 19 is displaced by the robot manipulator 17 outward in the radial direction and so as to be closer to the stator core 3 in the axial direction in a state in which the tip end portion 10a of the first coil end portion 9Aa is held. At this time, the inclination of the bending jig 19 is returned so that the wall portion 29 is along the axial direction.

As this result, the first coil end portion 9Aa is pressed against the curved face 29a of the wall portion 29, and the first coil end portion 9Aa is bent. With this, the first coil end portion 9Aa is bent in the crank shape to be the power line 11.

As mentioned above, the method for manufacturing the stator 1 of the present embodiment bends the second coil end portion 9b adjacent inward to the first coil end portion 9Aa in the radial direction of the stator core 3 so that the base end portion 10b is inclined outward in the radial direction and the tip end portion 10a is along the axial direction. The first coil end portion 9Aa is kept in the inclined state along the inclination of the base end portion 10b of the second coil end portion 9b. Then, the tip end portion 10a of the inclined first coil end portion 9Aa is held and displaced to bend the first coil end portion 9Aa to be the power line 11.

The present embodiment, therefore, utilizes the bending of the second coil end 9b to separate the first coil end portion 9Aa from the second coil end portion 9b and easily and surely holds the tip end portion 10b of the first coil end portion 9Aa. Then, the holding tip end portion 10b of the first coil end portion 9Aa is displaced to easily and surely bend the first coil end portion 9Aa.

In this way, the present embodiment easily forms the power line 11 by bending the first coil end portion 9Aa.

Further, the present embodiment positions and holds the tip end portion 10a of the inclined first coil end portion 9Aa between the tooth 25c and the wall portion 29 that are the pair of the wall portions. At this time, the wall portion 29 being one of the pair of the wall portions is located between the first coil end portion 9Aa and the second coil end portion 9b. Then, the first coil end portion 9Aa is pressed against the curved face 29a provided at the tip end of the wall portion 29 to be bent.

The present embodiment, therefore, more easily bends the first coil end portion 9Aa. Employing this configuration, the wall portion 29 is not made thin unlike the tooth 25c due to the provision of the curved face 29a. Since the first coil end portion 9Aa is, however, separated from the second coil end portion 9b, the first coil end portion 9Aa is easily and surely held between the tooth 25c and the wall portion 29.

Further, the present embodiment axially inserts the tooth 25a into the interstice between the adjacent coil end portions 9 inside the second coil end portion 9b in the axial direction to incline the first coil end portion 9Aa from a state along the axial direction together with the second coil end portion 9b, and presses the tip end portion 10a of the second coil end portion 9b against the tooth 25a by the pusher 21 to be along the axial direction.

The present embodiment, therefore, easily inclines the first coil end portion 9Aa and the second coil end portion 9b simply by the insertion of the tooth 25a. Moreover, the first coil end portion 9Aa and the second coil end portion 9b are easily separated by bending the tip end portion 10a of the second coil end portion 9 b along the axial direction.

The first coil end portion 9Aa is axially shorter than the second coil end portion 9b in a state before the bending, and the pusher 21 presses the second coil end portion 9b against the tooth 25a within the range in which the second coil end portion is projected from the first coil end portion 9Aa in the axial direction.

The present embodiment, therefore, fixes the position of the pusher 21 in the axial direction between the case of forming the power line 11 and the case of not forming the power line 11, to achieve simplification and the like of the structure and the control of the manufacturing device 15, the process of the manufacturing method.

The manufacturing device 15 for the stator 1 of the present embodiment is provided with the tooth 25a that is inserted into the interstice between adjacent coil end portions 9, the pusher 21 that moves in the intersecting direction relative to the direction of the inserting with respect to the tooth 25a inserted into the interstice between the coil end portions 9, the holding part 27 that holds the tip end portion 10a of the first coil end portion 9Aa, and the controller 31 that controls the tooth 25a, the pusher 21, and the holding part 27.

The manufacturing device 15 for the stator 1, therefore, realizes the manufacturing method of the present embodiment, and easily forms the power line 11 by bending the first coil end portion 9Aa. In addition, the manufacturing device 15 does not need complicated control of the tooth 25a, the pusher 21, and the holding part 27, to simplify the structure and the control.

The tooth 25a and the holding part 27 are disposed on the bending jig 19 that is displaced by the robot manipulator. The operation of the tooth 25a and the holding part 27 is, therefore, made common, to simplify the structure and the control of the manufacturing device 15.

### EMBODIMENT 2

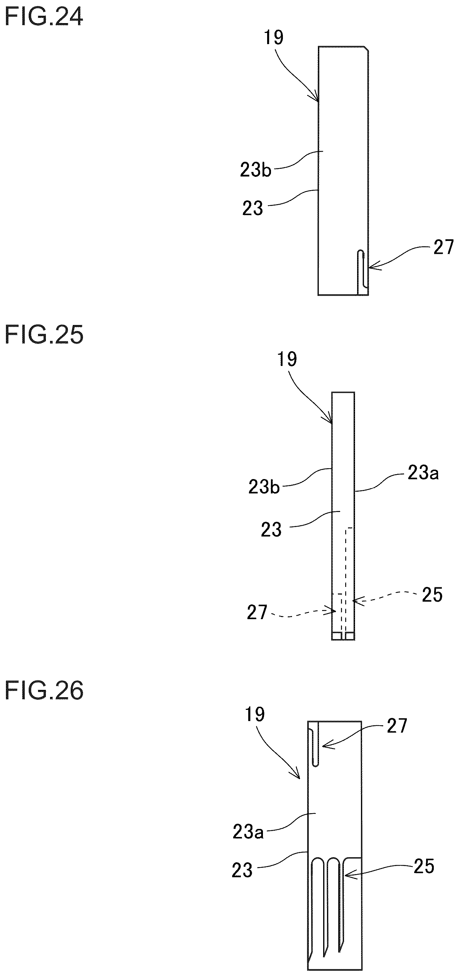

FIG. 23 is a front view illustrating a bending jig of a device for manufacturing a stator according to the second embodiment of the present invention. FIG. 24 is a rear view of the bending jig of FIG. 23. FIG. 25 is a side view of the bending jig of FIG. 23. In addition, the embodiment 2 is common with the embodiment 1 in the basic configuration, and components corresponding to the embodiment 1 are represented with the same reference numerals, to omit redundant explanation.

In the embodiment 2, as illustrated in FIGS. 23 to 25, a position of a holding part 27 of a bending jig 19 is changed relative to the embodiment 1. Namely, the bending jig 19 includes comb teeth 25 on one side face 23a of a main body portion 23, and the holding part 27 on the other side face 23b of the main body portion 23. The others are the same as of the embodiment 1.

FIG. 26 is a front view illustrating the bending jig according to a modification.

In the modification, although the comb teeth 25 and the holding part 27 are provided on one side face 23a of the main body portion 23 of the bending jig 19, the holding part 27 and the comb teeth 25 are respectively provided at end portions on opposite sides in a longitudinal direction of the main body portion 23. The others are the same as of the embodiment 1.

This embodiment also provides the same effects as the embodiment 1. In addition, since it is not necessary for the holding part 27 to be provided in parallel with the comb teeth 25, a dimension of the bending jig 19 is reduced. It should be noted that the position of the holding part 27 may be various positions on the main body portion 23 as long as the posture of the bending jig 19 is controlled to hold the tip end portion 10a of the first coil end portion 9Aa for the power line 11.

It should be noted that the holding part 27 is not necessarily integrated with the bending jig 19 and may be provided in a separated jig. The same holds for the embodiment 1.

### DESCRIPTION OF NUMERALS

1 Stator
3 Stator core
5 Stator coil
7 Segment coil
9 Coil end
9a-9f First - sixth coil ends
9Aa First coil end portion
10a Tip end portion
10b Base end portion
11 Power line
15 Manufacturing device
17 Robot manipulator
19 Bending jig
21 Pusher
25a, 25b, and 25c Teeth
27 Holding part
29 Wall portion
29a Curved face

## Claims

1. A method for manufacturing a stator in which a first coil end portion on an outermost periphery in a plurality of radially disposed coil end portions of segment coils held by a stator core is bent to be a power line, comprising:
bending a second coil end portion adjacent inward to the first coil end portion in a radial direction of the stator core so that a base end portion is inclined outward in the radial direction and a tip end portion is along an axial direction;
keeping the first coil end portion in an inclined state along an inclination of the base end portion of the second coil end portion; and
holding and displacing the tip end portion of the inclined first coil end portion to bend the first coil end portion to be the power line.

2. The method for manufacturing a stator according to claim 1, wherein
the tip end portion of the inclined first coil end portion is positioned between a pair of wall portions to be held,
one of the pair of the wall portions is positioned between the first coil end portion and the second coil end portion, and
the first coil end portion is pressed against a curved face provided at a tip end of said one of the pair of the wall portions to perform the bending.

3. The method for manufacturing a stator according to claim 1 or 2, wherein
a tooth is inserted in the axial direction into an interstice between adjacent coil end portions, the interstice being inside the second coil end portion in the radial direction, to incline the first coil end portion from a state along the axial direction together with the second coil end portion, and
the tip end portion of the second coil end portion is pressed against the tooth by a pusher to be along the axial direction.

4. The method for manufacturing a stator according to claim 3, wherein
the first coil end portion is axially shorter than the second coil end portion in a state before the bending, and
the pusher presses the second coil end portion against the tooth within a range in which the second coil end portion projects from the first coil end portion in the axial direction.

5. A device for manufacturing a stator in which a first coil end portion on an outermost periphery in a plurality of radially disposed coil end portions of segment coils held by a stator core is bent to be a power line, comprising:
a tooth that is inserted into an interstice between adjacent coil end portions;
a pusher movable with respect to the tooth inserted into the interstice between the coil end portions in an intersecting direction relative to a direction of the inserting;
a holding part that holds a tip end portion of the first coil end portion;
a controller that controls the tooth, the pusher, and the holding part, wherein
the controller conducts
inserting the tooth in an axial direction in the interstice between the coil end portions, a second coil end portion that is adjacent inside the first coil end portion in a radial direction in the stator core, the interstice being inside the second coil end portion in the radial direction, to incline the first coil end portion from a state along the axial direction together with the second coil end portion,
pressing a tip end portion of the second coil end portion against the tooth by the pusher, to make the tip end portion of the second coil end portion along the axial direction, and
displacing the holding part holding the tip end portion of the inclined first coil end portion, thereby bending the first coil end portion to be the power line.

6. The device for manufacturing a stator according to claim 5, wherein
the holding part is provided with a pair of wall portions that cause the tip end portion of the inclined first coil end portion to be positioned and held therebetween, and a curved face that is provided at a tip end of one of the pair of the wall portions that is located between the first coil end portion and the second coil end portion at the time of the holding and is pressed against the first coil end portion to perform the bending.

7. The device for manufacturing a stator according to claim 6, wherein
the tooth and the holding part are arranged on a bending jig displaceable by a robot manipulator.
